# EUROPÄISCHE PATENTSCHRIFT

(11) **EP 1 992 017 B1**
(45) Veröffentlichungstag und Bekanntmachung des Hinweises auf die Patenterteilung: **16.04.2014**
(21) Anmeldenummer: 07722829.4
(22) Anmeldetag: 15.02.2007
(51) Int. Cl.: H01L 31/048, E04D 3/36, F24J 2/52

(54) **BEFESTIGUNGSVORRICHTUNG FÜR GEGENSTÄNDE AUF ABGEDICHTETEN GEBÄUDEAUSSENFLÄCHEN**
FASTENING DEVICE FOR FASTENING OBJECTS ON SEALED OUTER BUILDING SURFACES
DISPOSITIF DE FIXATION D'OBJETS SUR DES SURFACES EXTÉRIEURES ÉTANCHÉES D'IMMEUBLES

(30) Priorität: 16.02.2006 DE 102006007294; 24.03.2006 DE 102006013792; 15.05.2006 DE 102006022593; 16.05.2006 DE 102006022870; 12.01.2007 WO PCT/EP2007/000274
(43) Veröffentlichungstag der Anmeldung: 19.11.2008
(73) Patentinhaber: Schweiger, Thomas, 82031 Grünwald (DE)
(72) Erfinder: Schweiger, Thomas, 82031 Grünwald (DE)
(74) Vertreter: Winter, Brandl, Fürniss, Hübner, Röss, Kaiser, Polte - Partnerschaft
(86) Internationale Anmeldenummer: PCT/EP2007/001323
(87) Internationale Veröffentlichungsnummer: WO 2007/093421

(56) Entgegenhaltungen:
- DE-U1-202004 005 224
- FR-A1- 2 676 242

## Beschreibung

### Technisches Gebiet der Erfindung

Die Erfindung betrifft eine Befestigungsvorrichtung für Gegenstände, insbesondere für Aufbauten wie Photovoltaik-Anlagen, auf abgedichteten Gebäudeaußenflächen wie z.B. Flachdachkonstruktionen gemäß dem Oberbegriff des Anspruchs 1.

### Stand der Technik

Gerade größere Gebäude, wie Mehrfamilienhäuser, Industrie- und Gewerbebauten, Bildungseinrichtungen, Hotels etc., bieten sehr gute Voraussetzungen für die Nutzung von Solarenergie, da der spezifische Systempreis, d.h. Kosten pro Quadratmeter Kollektorfläche, wesentlich geringer als bei Kleinanlagen ist. Bei diesen großflächigen Dächern handelt es sich überwiegend um Flachdachkonstruktionen, bei denen als wesentlicher Kostenfaktor die Unterkonstruktion und Montage der Kollektoren Bedeutung erlangt, da die Kollektoren im Vergleich zu Steildächern wegen des Wasserlaufs gegenüber der wasserführenden Schicht der Dachabdichtung aufgeständert und in der Regel noch gegenüber dem horizontalen Flachdach, z.B. mittels eines dreieckförmigen Montagerahmens, in einem Winkel von ca. 30° angestellt und zur Sonne hin ausgerichtet werden.

Je nach Aufbau des Flachdaches sind verschiedene Unterkonstruktionen für die Montage solcher Photovoltaik-Anlagen bekannt. So werden bei vollflächig belastbaren Flachdächern, z.B. bei Massivflachdächern aus Stahlbeton, die Aufständerung der Photovoltaik-Anlagen mit Hilfe von Betonplatten oder kiesgefüllten Wannen balastiert, um die Anlagen gegen Windkräfte zu sichern.

Aber selbst bei an sich belastbaren Massivdächern ist es wünschenswert, dass neben der Eigenlast des Daches sowie der Wind- und Schneelast und dem Gewicht der Photovoltaik-Anlagen die Tragreserve des Daches durch schwere Betonplatten nicht unnötig reduziert wird.

Für Leichtdachkonstruktionen, wie z.B. für Flachdächer mit einer leichten, biegeweichen Gerippekonstruktion aus Holz, Stahl oder Stahlbeton mit einer oberseitigen Tragschicht aus Holz oder Trapezblechprofilen, eignen sich die von Massivflachdächern bekannten Ballastierungen der Unterkonstruktion aus statischen Gründen meistens nicht.

Hier kennt man sehr aufwendige und teure Unterkonstruktionen, welche zum Teil die gesamte Dachfläche überspannen und lediglich von den äußeren Gebäudewänden getragen werden. Zur Reduzierung dieser Kosten ist es aber wünschenswert, dass Aufbauten, wie z.B. Photovoltaik-Anlagen, auch bei solchen Leichtdachkonstruktionen von der Dachkonstruktion selbst getragen und gehalten werden können. Die Befestigung der Unterkonstruktion an der Tragkonstruktion des Flachdaches selbst und die damit verbunden Durchdringung der Dachhaut bringt das Problem der Abdichtung mit sich.

Ferner haben manche Unterkonstruktionen das Problem, dass sie an die Gebäudeausrichtung gebunden sind. Eine weitere wesentliche Anforderung an solche Unterkonstruktionen für Photovoltaik-Anlagen ist deshalb die Möglichkeit einer flexiblen Ausrichtung der Kollektoren.

Aus DE 20 2004 005 224 U1 ist ein Montagesystem zur Befestigung von Solarmodulen auf Flachdächern bekannt, bei welchem eine Dichtungsbahn über eine Schraubverbindung zwischen zwei Druckplatten eingeklemmt wird.

Eine Befestigungsvorrichtung gemäß dem Oberbegriff des Patentanspruchs 1 ist aus FR 2 676 242 A1 bekannt.

Eine Montageeinheit gemäß dem Oberbegriff des Patentanspruchs 11 ist aus US 2002/0066235 A1 bekannt

### Zusammenfassung der Erfindung

Der Erfindung liegt somit die Aufgabe zu Grunde, eine Befestigungsvorrichtung für Gegenstände auf abgedichteten Gebäudeaußenflächen wie z.B. für Flachdachaufbauten zu schaffen, welche bei möglichst geringer zusätzlicher Belastung eine flexible und ausreichende Befestigung von Gegenständen oder Aufbauten sicherstellt.

Diese Aufgabe wird durch die Merkmale des Anspruchs 1 gelöst.

Erfindungsgemäß wird der zu befestigende Gegenstand über den Montagekörper und dem Befestigungselement direkt an der Dachkonstruktion befestigt, so dass der Gegenstand bei angreifenden Windkräften oder Ähnlichem ausreichend gesichert ist. Durch die direkte Befestigung an der Tragkonstruktion kann auf eine zusätzliche Ballastierung verzichtet werden, so dass die erfindungsgemäße Befestigungsvorrichtung insbesondere für Leichtdachkonstruktionen, aber auch für Massivdachkonstruktionen mit geringen Tragreserven geeignet ist. Indem die Krafteinwirkung vom Gegenstand direkt auf die Dachkonstruktion überbrückt wird, werden die weiteren Dachschichten, z.B. die Abdichtung und die Wärmedämmung, nicht weiter belastet. Ferner wird über die Abdichtungsmanschette und in Anlehnung an eine sog. "Los- und Festflanschverbindung nach DIN 18195 T9" zwischen Montagekörper und Befestigungselement eine sichere Abdichtung des Durchdringungspunktes gewährleistet, so dass kostspielige Folgeschäden aufgrund von Wassereintritt in das Dach auf einfache und sichere Weise verhindert werden können. Ein weiterer Vorteil der erfindungsgemäßen Befestigungsvorrichtung ist, dass Aufbauten auf dem Flachdach befestigt werden können, ohne dabei den Wasserlauf auf dem Dach zu beeinträchtigen. Denn das Befestigungselement befindet sich im Wesentlichen unterhalb der Abdichtung. Der darüber befindliche Montagekörper stützt den zu befestigenden Gegenstand so, dass zwischen Gegenstand und Abdichtung vorzugsweise ein Freiraum für den Wasserlauf verbleibt. Der Montagekörper selbst kann entsprechend günstig gestaltet sein, dass er den Wasserlauf nicht beeinträchtigt. Ferner lassen sich erfindungsgemäß Aufbauten, z.B. Photovoltaik-Anlagen, unabhängig von der Gebäudeausrichtung oder von der Orientierung der Tragkonstruktion exakt, in der Regel in Richtung Süden, ausrichten.

Dabei bildet eine zwischen dem Montagekörper und dem Vorsprungsabschnitt befindliche Abdichtungsmanschette mit der Abdichtung der Gebäudeaußenfläche bzw. des Daches Überlappungsabschnitte und ist mit dieser dichtend verbindbar. Die erfindungsgemäße Befestigungsvorrichtung eignet sich somit nicht nur für Neubauten, sondern kann auch nachträglich ohne großen Aufwand auf bereits bestehenden Flachdächern montiert werden, indem das über der Tragkonstruktion befindliche Schichtenpaket (Wärmedämmung, Abdichtung, u.ä.) nur punktuell zur Einbringung des Befestigungselements geöffnet wird und anschließend mittels Abdichtungsmanschette und Los- und Festflanschverbindung zwischen Montagekörper und Befestigungselement wieder dicht verschlossen wird.

Es hat sich gezeigt, dass der Basisabschnitt des Befestigungselements bei Warmdächern direkt auf die auf der Tragkonstruktion befindliche Dampfsperrschicht montiert werden kann, so dass diese zur Montage der Befestigungsvorrichtung nicht entfernt werden muss.

Erfindungsgemäß ist die Abdichtungsmanschette mittels einer Spann-, wie z.B. einer Schraubverbindung zwischen Montagekörper und Vorsprungsabschnitt dicht eingepresst. Eine solche Einklemmung kann in Anlehnung an eine Los- und Festflanschkonstruktion nach DIN 18195 T9 erfolgen. Damit lässt sich auf einfache Weise die Verbindung zwischen Montagekörper und Befestigungselement sicher abdichten. Eine einfache Spannverbindung lässt sich durch eine Schraubverbindung realisieren. Es kann jedoch auch jede andere Spannverbindung gleichermaßen Anwendung finden, beispielsweise eine Spannverbindung mit zumindest einem Spannbolzen, der einerseits mit dem Vorsprungsabschnitt verbunden ist und andererseits mit einer Einrichtung zusammenwirkt, mit der der Montagekörper gegen den Vorsprungsabschnitt spannbar ist.

Die Spann- bzw. Schraubverbindung ist dergestalt, dass wenigstens ein oder mehrere Spann- bzw. Gewindebolzen oder Spann- bzw. Schraubverbindungen zur Befestigung des Montagekörpers entweder materialschlüssig angebracht sind oder derart, dass eine Fügefläche zwischen dem Spannbolzen und dem Vorsprungsabschnitt keinen Durchtritt durch den Vorsprungsabschnitt hat. Dies bedeutet, dass selbst bei Wassereintritt zwischen Montagekörper und Vorsprungsabschnitt keinerlei Feuchtigkeit über die Fügefläche, wie z.B. den Gewindezug durch den Vorsprungsabschnitt in das Dachinnere eintreten kann.

Erfindungsgemäß ist dabei nur eine Dichtebene erforderlich. Aufgrund der erfindungsgemäßen Befestigung des Spann- bzw. Gewindebolzens, beispielsweise durch die Anschweißung dicht am Vorsprung, kann kein Niederschlagswasser über den Gewindegang ins Dachschichtenpaket eindringen. Die Dichtung erfolgt somit einzig und allein über eine Klemmung der Dachhaut zwischen dem Montagekörper und dem Vorsprungsabschnitt. Eine zweite Klemmung bzw. eine Montage einer Kappe über dem Montagekörper, wie es beim Stand der Technik der Fall ist, ist nicht notwendig. Dadurch wird auf einfache Weise eine sehr dichte Befestigungsvorrichtung für Dachaufbauten geschaffen.

Um die erfindungsgemäße Befestigungsvorrichtung für unterschiedlich dicke Schichtenpakete aus Wärmedämmung, Abdichtung, Dampfsperre verwenden zu können, ist der Vorsprungsabschnitt höheneinstellbar. So kann die universelle Befestigungsvorrichtung den jeweiligen Bedingungen vor Ort.angepasst werden. Eine Anpassung bereits bei der Herstellung der Befestigungsvorrichtung entfällt somit.

Die Höhenverstellung kann auf verschiedene Weise erfolgen. Durch eine besonders einfache Handhabungzeichnet sich ein zweiteiliger Bolzen aus, wovon ein Abschnitt ein Gewinde aufweist, welches sich mit dem Gegengewinde des anderen Bolzenabschnitts verschrauben lässt. So lässt sich durch Drehung der Teile die Lage der beiden Bolzenabschnitte zueinander und somit der Abstand der Stirnfläche des Vorsprungsabschnitts zur Tragkonstruktion auf einfache Weise einstellen und der jeweilige Dicke der Wärmedämmung und der anderen Schichten anpassen.

Erfindungsgemäß ist die Befestigungsvorrichtung im vormontierten Zustand mit der zwischen dem Montagekörper und den Vorsprungsabschnitt eingespannten Abdichtungsmanschette an der Tragkonstruktion befestigbar.

Um die an sich sichere Abdichtung zwischen Montagekörper und Vorsprungsabschnitt weiter zu erhöhen, kann zwischen Montagekörper und Abdichtungsmanschette und/oder zwischen Vorsprungsabschnitt und Abdichtungsmanschette eine Dichtungs- oder Druckbeilage, wie z.B. eine Neoprenschicht oder -platte zusätzlich vorgesehen sein. Diese Dichtungs- oder Druckbeilage, beispielsweise als Neoprenschicht stellt einen gleichmäßigen Anpressdruck zwischen Montagekörper und Befestigungselement sicher und gleicht etwaige Unebenheiten in der Abdichtungsmanschette aus, so dass eine sichere Abdichtung gewährleistet wird. Als Material für die Dichtungs- oder Druckbeilage kann auch das Material der Abdichtungsmanschette herangezogen werden. Grundsätzlich wird das Material und/oder die Geometrie der Dichtungs- oder Druckbeilage an die vorliegenden Randbedingungen angepasst, wie z.B. an die Dicke und/oder die Kompressibilität der einzuklemmenden Schicht, so dass ein Höchstmaß and Dichtwirkung sichergestellt ist.

Montagekörper und Vorsprungsabschnitt lassen sich nicht nur kraftschlüssig, z.B. über eine Schraubverbindung, miteinander verbinden, sondern auch stoffschlüssig, z.B. durch geeignete Schweißverfahren, insbesondere Wärmeschweißverfahren oder Induktionsschweißverfahren, oder durch Kleben. Wenn die Verbindung durch ein Schweißverfahren erfolgt, weisen der Montagekörper und der Vorsprungsabschnitt an geeigneten Stellen Beschichtungen auf, so dass sich diese jeweils mit der Abdichtung oder der Abdichtungsmanschette verschweißen lassen und über die Abdichtung bzw. die Abdichtungsmanschette miteinander verbunden sind. Dabei sind für die Beschichtung des Montagekörpers und des Vorsprungsabschnitts entsprechende mit dem Material der Abdichtung bzw. der Abdichtungsmanschette kompatible Materialien auszuwählen.

Die Höhe des Vorsprungsabschnitts kann so gewählt sein, dass die Stirnfläche des Vorsprungsabschnitts bündig mit der Abdichtung ist. Um jedoch zu vermeiden, dass auf dem Dach stehendes Wasser direkt auf den Verbindungsabschnitt zwischen Montagekörper und Befestigungselement drückt, kann die Höhe des Vorsprungsabschnitts des Befestigungselements vorzugsweise aber auch so gewählt werden, dass er über die Abdichtung hervorsteht, so dass das Niveau des Verbindungsabschnitts in der Regel über der wasserführenden Schicht der Dachabdichtung liegt.

Zur dichten Verbindung zwischen Abdichtungsmanschette und Abdichtung können beide miteinander verschweißt oder dicht verklebt werden. Eine solche Vorgehensweise hat sich bei Reparaturarbeiten an Flachdächern gut bewährt, insbesondere wenn als Material für die Abdichtungsmanschette das gleiche Material wie bei der Abdichtung verwendet wird oder zumindest ein verträgliches Material, welches sich mit dem der Abdichtung dichtend verbinden lässt. Als besonders geeignet haben sich z.B. ein- oder mehrlagige bituminöse oder Kunststoffschichten erwiesen.

Der Montagekörper und/oder das Befestigungselement ist vorteilhafterweise aus Edelstahl, z.B. V2A hergestellt, wodurch neben einer ausreichenden Festigkeit eine gute Korrosionsbeständigkeit bereitgestellt wird.

Wenn im Basisabschnitt in vorbestimmten Abständen bzw. mit vorbestimmten Lochmuster Bohrungen vorgesehen werden, kann die erfindungsgemäße Befestigungsvorrichtung für verschiedenste Dachkonstruktionen, insbesondere bei Trapezblechdächern mit unterschiedlich breiten und/oder beabstandeten Obergurten bei einfacher Montagehandhabung verwendet werden. Aufgrund des bestehenden Lochmusters wird die Montage stark vereinfacht. Dennoch ist aufgrund der im Vergleich zum Vorsprungsabschnitt vergrößerten Fläche des Basisabschnitts dafür gesorgt, dass immer die eine oder andere Bohrung in Deckung mit einem Obergurt und mit hoher Wahrscheinlichkeit sogar mit mehreren Obergurten des Trapezbleches kommt, so dass ein Standardbefestigungselement geschaffen wird, welches für verschiedenste Trapezblechdächer geeignet ist. Aufgrund der quasi punktuellen Befestigung der Dachaufbauten über dem Montagekörper ist das Befestigungspunktmuster nicht mehr mit der Geometrie des Flachsdachs und nicht mehr an die Ausrichtung der Flachdachkonstruktion gekoppelt. Dies ist insbesondere bei Photovoltaik-Anlagen von Bedeutung, weil diese dann unabhängig von der Gebäuderichtung vorzugsweise in Richtung Süden ausgerichtet werden können.

Je größer die Fläche des Basisabschnitts ist, desto breiter ist das Einsatzgebiet. Die Fläche des Basisabschnitts wird vorzugsweise an die Tragkonstruktion des Gebäudeaußenfläche bzw. des Flachdachs angepasst. Sie kann in bestimmten Anwendungsfällen auf die Grundfläche eines Distanzbolzens beschränkt sein, der dann gleichzeitig den Vorsprungsabschnitt bildet.

Zur Sicherstellung einer durchgehenden Wärmedämmung kann der durch den Vorsprungsabschnitt gebildete bzw. von diesem überbrückte Hohlraum mit Dämmmaterial, z.B. mit dem Dämmmaterial, das vor dem Einbringen des Befestigungselements aus dem Dach entfernt worden ist, ausgefüllt werden.

Ferner kann die erfindungsgemäße Befestigungsvorrichtung in Verbindung mit allen gängigen Tragkonstruktionen, z.B. Beton-, Stahl, Holz-, Trapezblechkonstruktionen und andere, verwendet werden, so dass es sich um eine sehr flexible einsetzbare Vorrichtung handelt.

Die Fixierung der Lage der beiden Bolzenabschnitte zueinander kann vorzugsweise über eine Kontermutter erfolgen.

Ferner kann vorzugsweise zwischen dem Basisabschnitt und der Tragkonstruktion ein Isolierabschnitt angeordnet sein, welcher die Befestigungsvorrichtung von der Tragkonstruktion der Gebäudeaußenfläche thermisch entkoppelt, so dass keine Wärme bzw. Kälte über die Befestigungsvorrichtung in das Gebäudeinnere geleitet wird.

Damit die Lagerhaltung auch dann einfach gehalten werden kann, wenn Befestigungsvorrichtungen für unterschiedlichste Dachkonstruktionen, insbesondere unterschiedlichster Dicken, in kürzester Zeit bereit gestellt werden sollen, wird das Kernstück der Befestigungsvorrichtung zu einer Montageeinheit zusammengefasst, die Gegenstand der nebengeordneten Ansprüche ist.

Diese Montageeinheit ist in der Weise vormontiert, dass die Abdichtungsmanschette mit vorbestimmtem Zuschnitt bereits fest und ringsum abgedichtet eingespannt ist. Zur Montage werden diese vormontierten Montageeinheiten in der erforderlichen Anzahl auf die Baustelle gebracht und dort mit variablen Stegteilen und/oder Montageplatten zusammengestellt. Auch die Montageplatten können einheitlich für alle Einsatzgebiete ausgebildet werden, so dass lediglich noch die Stegteile variabel gehalten werden müssen. Die Stegteile sind dementsprechend in unterschiedlichen Längen vorzuhalten.

Die Stegteile können jedoch auch entweder mit der Stützplatte oder mit der Montageplatte zu einer handhabbaren Einheit vormontiert sein.

Auch bei der Montageeinheit kann die Klemm- bzw. Spannkraft des zumindest einen Spannbolzens auf die Abdichtungsmanschette zumindest auf einer Seite über eine Abdichtungsbeilage eingeleitet werden.

Das Stegteil kann von einem Gewindestab oder -rohr gebildet sein, wobei dann die Stützplatte unterseitig entweder eine Schraubmutter oder einen Gewindebolzen trägt.

Die als Einheit handhabbare Montageeinheit kann auch um das Stegteil und sogar um die Montageplatte erweitert werden.

### Kurze Beschreibung der Zeichnungen

Nachstehend werden anhand schematischer Zeichnungen vorteilhafte Ausführungsformen der Erfindung näher beschrieben. Es zeigen:
Fig. 1 eine perspektivische Ansicht einer Befestigungsvorrichtung nach einer ersten nicht von der Erfindung umfassten Ausführungsform;
Fig. 2 eine Querschnittsansicht einer Befestigungsvorrichtung nach der ersten nicht von der Erfindung umfassten Ausführungsform;
Fig. 3 die Detailansicht III in Fig. 2
Fig. 4 eine Draufsicht einer Befestigungsvorrichtung nach der ersten nicht von der Erfindung umfassten Ausführungsform;
Fig. 5 eine Draufsicht einer auf dem Dach montierten Befestigungsvorrichtung nach der ersten nicht von der Erfindung umfassten Ausführungsform;
Fig. 6 eine perspektivische Ansicht einer Befestigungsvorrichtung nach einer zweiten nicht von der Erfindung umfassten Ausführungsform;
Fig. 7 eine perspektivische Ansicht einer Befestigungsvorrichtung nach einer dritten nicht von der Erfindung umfassten Ausführungsform;
Fig. 8 eine perspektivische Ansicht einer Befestigungsvorrichtung nach einer vierten nicht von der Erfindung umfassten Ausführungsform;
Fig. 9 einen schematischen Schnitt einer Befestigungsvorrichtung nach einer fünften nicht von der Erfindung umfassten Ausführungsform;
Fig 10 eine der Fig. 9 entsprechende Ansicht einer sechsten nicht von der Erfindung umfassten Ausführungsform der Befestigungsvorrichtung;
Fig. 11 eine der Fig. 9 entsprechende Ansicht einer erfindungsgemäßen siebten Ausführungsform;
Fig. 12 eine der Fig. 9 entsprechende Ansicht einer erfindungsgemäßen achten Ausführungsform der Befestigungsvorrichtung; und
Fig. 13 eine der Fig. 9 entsprechende Ansicht einer erfindungsgemäßen neunten Ausführungsform der Befestigungsvorrichtung;
Fig. 14 eine der Fig. 9 entsprechende Ansicht der erfindungsgemäßen zehnten Ausführungsform der Befestigungsvorrichtung; und
Fig. 15 eine der Fig. 9 entsprechende Ansicht der elften nicht von der Erfindung umfassten Ausführungsform der Befestigungsvorrichtung.

### Detaillierte Beschreibung der Erfindung anhand erfindungsgemäßer und nicht von der Erfindung umfassten Ausführungsformen

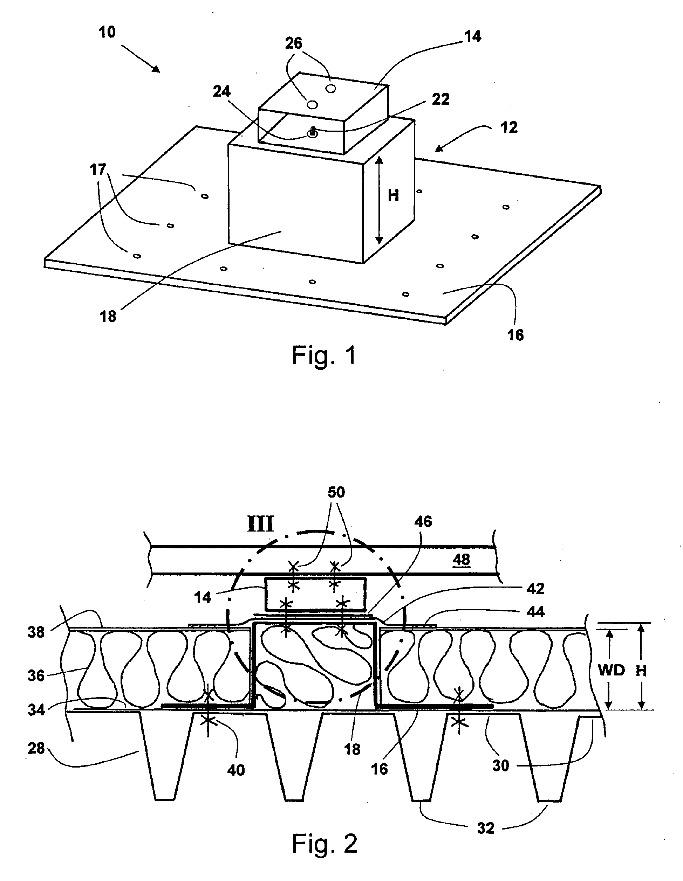

Fig. 1 zeigt eine perspektivische Ansicht der Befestigungsvorrichtung 10 mit einem Befestigungselement 12 und einem Montagekörper 14. Das Befestigungselement 12 weist einen Basisabschnitt 16 und einen Vorsprungsabschnitt 18 auf. Wie aus Fig. 1 ferner zu erkennen ist, ist der Vorsprungsabschnitt 18 mittig auf dem Basisabschnitt 16 angeordnet. Jedoch kann das Befestigungselement 12 nicht nur einen, sondern auch mehrere verteilte Vorsprungsabschnitte 18 gleicher Höhe aufweisen. Der Vorsprungsabschnitt 18 ist quader- bzw. würfelförmig ausgebildet, an dessen Stirnfläche 20 mittels Spann- bzw. Gewindebolzen 22 oder einer normalen Schraubverbindung der Montagekörper 14 befestigt ist. Der Vorsprungsabschnitt kann auch anders gestaltet sein und z.B. die Form eines Zylinders, Kegel- oder Pyramidenstumpfes haben. Der Montagekörper 14 wird durch ein offenes, stranggepresstes oder anders gefertigtes Kastenprofil gebildet, welches auf der der Stirnfläche 20 des Vorsprungsabschnitt 18 zugewandten Seite Bohrungen 24 für die Spann- bzw. Gewindebolzen 22 aufweist und auf der gegenüberliegenden Seite Bohrungen 26 zur Befestigung eines Gegenstandes aufweist. Dieser Gegenstand kann z.B. eine Unterkonstruktion für Photovoltaik-Anlagen, aufgeständerte Wartungsweg- oder Fluchtwegkonstruktionen, Blitzschutz- oder Antennenvorrichtungen, und ähnliches sein.

Fig. 2 zeigt eine Querschnittsansicht einer Befestigungsvorrichtung 10, welche auf einer Trapezblechdachkonstruktion eines Warmdaches befestigt ist. Der grundsätzliche Aufbau dieses Flachdaches ist wie folgt:
Die Tragkonstruktion wird von einem Trapezblech 28 gebildet, welches von einer nicht gezeigten Gerippekonstruktion aus Holz, Stahl oder Stahlbeton getragen wird. Der Querschnitt des Trapezbleches 28 besteht aus abwechselnd nach oben bzw. unten offenen Trapezen, welche horizontale obere Flächen, sogenannte Obergurte 30, und horizontale untere Flächen, sogenannte Untergurte 32, bilden. Über dem Trapezblech 28 befindet sich eine Dampfsperre 34, welche flächig auf den Obergurten 30 aufliegt bzw. verklebt ist. Die Dampfsperre 34 ist eine Schicht oder eine Folie, die das Durchdringen von Wasserdampf verhindert. Hierzu werden vor allem Folien mit Metällbeschichtungen, aus Kunststoff oder sonstigen geeigneten Materialien verwendet. Die Dampfsperre 34 sorgt dafür, dass sich in der darüberliegenden Wärmedämmung 36 kein Kondensat niederschlägt. Für die Wärmedämmung 36 können künstliche (Polystyrol, Polyurethan, Polyester, etc.), mineralische (Schaumglas, Glasswolle, etc.) oder natürliche (Zellulose, Hanf, Holzfasern, etc.) Materialen verwendet werden. Über der Wärmedämmung 36 befindet sich die Abdichtung 38, welche verhindert, dass Feuchtigkeit in das Gebäude eindringt und hierdurch teure Schäden in der Dachkonstruktion selbst oder im Gebäudeinneren entstehen. In der Regel werden dazu Kunststofffolien oder bituminöse Abdichtungsbahnen verwendet. Zusätzlich können noch weitere - in Fig. 2 nicht gezeigte - Schichten wie eine Gefälleschicht, eine Trenn- und Ausgleichsschicht, eine Dampfdruckausgleichs- und Trennschicht und eine Bekiesung als Oberflächenschutz vorgesehen sein.

Der Basisabschnitt 16 des Befestigungselements 12 wird an den Obergurten 30 und über der Dampfsperre 34 mit Befestigungselementen 40, z.B. Kippdübeln oder Ähnlichem, befestigt. Die Höhe H des Vorsprungsabschnitts 18 ist so gewählt, dass sie größer als die Höhe WD der Wärmedämmung 36 und der vergleichsweise dünnen Abdichtung 38 zusammen ist, so dass die Stirnfläche 20 des Vorsprungsabschnitts 18 über die Abdichtung 38 hervorsteht. Über die Stirnfläche 20 des Vorsprungsabschnitts 18 wird eine Abdichtungsmanschette 42 so angeordnet, dass sie mit der umgebenden Abdichtung 38 des Daches Überlappungsabschnitte 44 bildet. An den Überlappungsabschnitten 44 ist die Abdichtungsmanschette 42 mit der Abdichtung 38, z.B. durch Verschweißen oder Dichtkleben, dichtend verbunden. Als Material für die Abdichtungsmanschette 42 kann das gleiche Material wie bei der Abdichtung 38, z.B. eine zweilagige bituminöse oder eine einlagige Kunststoffschicht, verwendet werden. Über der Abdichtungsmanschette 42 kann eine Neoprenplatte 46, kunststoffplatte oder Ähnliches angeordnet werden, welche zusammen mit der Abdichtungsmanschette durch den darüber befestigten Montagekörper 14 dichtend verspannt wird. Dabei sind in der Abdichtungsmanschette 42 und in der Neoprenplatte 46 Ausnehmungen für die Schraubverbindung zwischen Montagekörper 14 und Befestigungselement 12 vorgesehen.

Wenn die Befestigungsvorrichtung nicht erst nachträglich auf einem bereits dem Flachdach angebracht wird, sondern schon beim Neubau berücksichtigt wird, hat man die Möglichkeit, das Befestigungselement 12 an der Tragkonstruktion 28 zu befestigen, bevor die Wärmedämmung 36 und die Abdichtung 38 auf dem Flachdach verlegt werden. Da in diesem Fall die Abdichtung 38 nicht zu erst geöffnet und anschließend mittels Abdichtungsmanschette 42 wieder dicht verschlossen werden muss, kann die neu verlegte Abdichtung 38 selbst zwischen Montagekörper 14 und Vorsprungsabschnitt 18 eingespannt werden. Der Aufbau ist wie in Fig. 2 gezeigt, nur dass eben statt der Abdichtungsmanschette 42 die Abdichtung 38 durchgehend zwischen Montagekörper 14 und Vorsprungsabschnitt 18 des Befestigungselements 12 eingespannt ist.

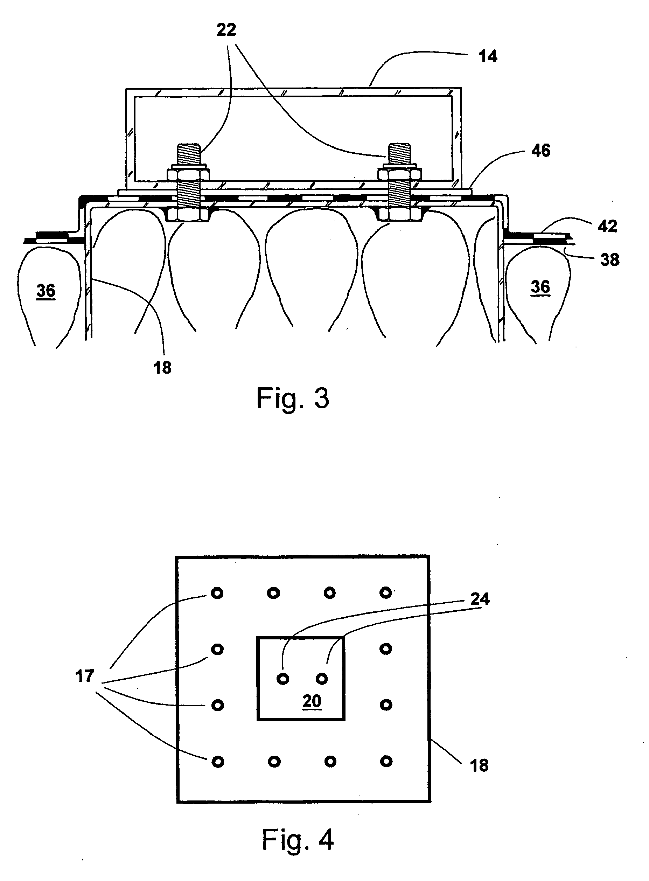

Zur Befestigung des Montagekörpers 14 stehen aus der Stirnfläche 20 ein oder mehrerer Spann- bzw. Gewindebolzen 22 heraus, welche von innen durch Ausnehmungen in der Stirnflächenwandung des Vorsprungsabschnitts 18 durchgeführt und anschließend mit dem Vorsprungsabschnitt verschweißt sind (siehe Fig. 3). Auf diese Weise wird sichergestellt, dass keine Feuchtigkeit über die Gewindezüge Schraubverbindung ins Innere des Befestigungselements 12 und ins Gebäudeinnere eindringen kann. Der zu befestigende Gegenstand, z.B. die Basisträger 48 einer Photovoltaik-Anlage, ist mit einem beliebigen Befestigungselement 50 an den Montagekörper 14 befestigt.

In der Draufsicht der Fig. 4 sind deutlich die vorzugsweise vorgefertigten Bohrungen 17 im Basisabschnitt und die Bohrungen 24 im Vorsprungsabschnitt 18 zu sehen. Um die erfindungsgemäße Befestigungsvorrichtung 10 auf verschiedenen Tragkonstruktionen von Flachdächern einsetzen zu können, sind im Basisabschnitt mehr Bohrungen 17 vorgesehen als sie zur Befestigung an der Dachkonstruktion, z.B. an einer Betondecke oder in dem hier dargestellten Ausführungsbeispiel am Trapezblech 28, notwendig wären. Dadurch lässt sich aber gewissermaßen eine "Universal"-Befestigungsvorrichtung 10 schaffen, deren Basisplatte 16 sich an Trapezblechen 28 mit unterschiedlich beabstandeten Obergurten 30 und in unterschiedlichen Ausrichtungen befestigen lässt, da aufgrund der Vielzahl von Bohrungen 17 die Wahrscheinlichkeit hoch ist, dass zumindest zwei dieser Bohrungen in Deckung mit entsprechenden Obergurten 30 des Trapezblechs 28 kommen. Eine individuelle Anpassung der Befestigungsvorrichtung 10 vor Ort entfällt somit, so dass die vorgebohrte "Universal"-Befestigungsvorrichtung 10 auf dem Dach lediglich montiert werden braucht. Die Befestigungspunkte für die Träger 48 der Photovoltaik-Anlage können diese Weise unabhängig von der Orientierung des Flachdachprofils und/oder der Flachdachtragkonstruktion gesetzt werden, so dass sich ein Höchstmaß an Flexibilität der Befestigung ergibt. Damit eignet sich die Vorrichtung für eine größtmögliche Stromausbeute der Photovoltaik-Anlage, unabhängig von der Ausrichtung des mit Flachdach ausgestatteten Gebäudes.

Eine rechteckige Grundfläche, deren eine Seitenlänge wenigstens 400mm beträgt, für den Basisabschnitt und 200x200 mm für die Stirnfläche 20 des Vorsprungsabschnitts 18 haben sich als praktikable Abmessungen gezeigt. Freilich ist der erfindungsgemäße Gegenstand nicht auf diese Abmessungen begrenzt.

Zur Vermeidung von Korrosion und Einhaltung von Brandschutzrichtlinien ist es sinnvoll, die Befestigungsvorrichtung 10, d.h. das Befestigungselement 12 und der Montagekörper 14, aus Edelstahl, z.B. aus V2A, verzinkten Stahl oder Verbundbaustoffe zu fertigen.

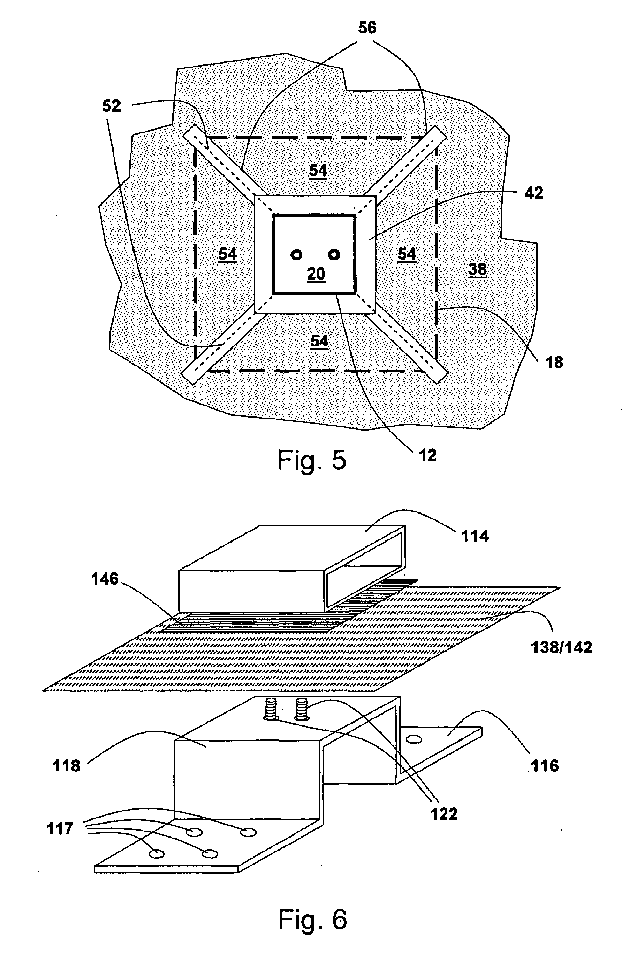

Die Befestigungsvorrichtung 10 kann nicht nur bei Neubauflachdächern, sondern auch nachträglich bei bereits bestehenden Flachdächern installiert werden. Bei der nachträglichen Montage wird, wie aus Fig. 5 hervorgeht, aus der Abdichtung 38 und der Wärmedämmung 36 Material in etwa der Größe des Vorsprungsabschnitts 18 herausgeschnitten bzw. entfernt. Ferner werden Abdichtung 38 und Wärmedämmung 36 geschlitzt und zwar so, dass die schlitze 52 in etwa den Diagonalen der rechteckigen Grundfläche des Basisabschnitts 16 entsprechen. Diese Schlitze 52 reichen aus, um die vier durch die Schlitze 52 entstandenen trapezförmigen Abschnitte 54 der Abdichtung 38 und Wärmedämmung 36 derart hochklappen zu können, dass das Befestigungselement 12 mit dem Basisabschnitt 16 voran unter die Abdichtung 38 und Wärmedämmung 36 eingebracht und am Trapezblech 28 befestigt werden kann. Freilich müssen anschließend die in die Abdichtung 38 eingebrachten Schlitze 52, z.B. mit Hilfe von Abdichtbahnen 56 oder einer auch die Schlitze 52 übergreifenden Abdichtungsmanschette 42, wieder dicht verschlossen werden.

Es ist aber auch möglich, aus der Abdichtung 38 und Wärmedämmung 36 Material in der Größe der Grundfläche des Basisabschnitts 16 zunächst zu entnehmen und nach dem Einbringen des Befestigungselements wieder einzusetzen und abzudichten.

In den Figuren 6 bis 10 sind weitere Ausführungsformen der Befestigungsvorrichtung bzw. des Befestigungselements gezeigt. Zur Vereinfachung der Beschreibung sind diejenigen Bauteile, die den Komponenten der zuvor beschriebenen Ausführungsform entsprechen mit identischen bzw. mit ähnlichen Bezugszeichen versehen, denen eine weitere Ziffer vorangestellt ist.

Fig. 6 zeigt ein als Winkelprofil ausgestaltetes Befestigungselement 112. Die Basisabschnitte 116 sind mit einem Lochmuster versehen.

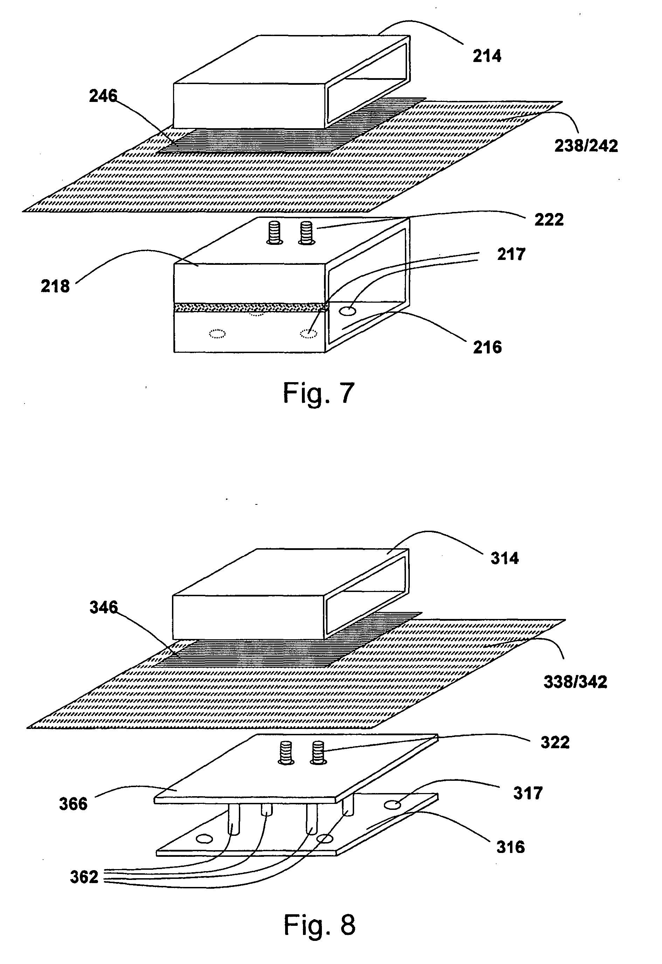

Das in Fig. 7 gezeigte Befestigungselement 212 ist aus einem Blech zu einem rechteckigen Hohlprofil geformt, dessen eine (untere) Seite den Basisabschnitt 216 und die anderen drei Seiten den Vorsprungsabschnitt 218 bilden. Das so geformte Befestigungselement kann an den Stoßkanten z.B. stoffschlüssig verbunden, vorzugsweise verschweißt werden.

In den Fig. 8 bis 12 sind verschiedene weitere Ausführungsformen des Befestigungselements gezeigt, die sich durch ein geringeres Gewicht und noch größerer Flexibilität auszeichnen.

Bei der Variante nach Figur 8 sind die Vorsprungsabschnitte 318 modifiziert. Sie werden von mehreren Bolzen 362 gebildet, die an einer Grundplatte 366 befestigt sind und oberseitig eine Platte tragen, welche ihrerseits - wie bei der Ausführungsform nach den Figuren 1 bis 5 - mit den Spann- bzw. Gewindebolzen 322 materialschlüssig verbunden ist.

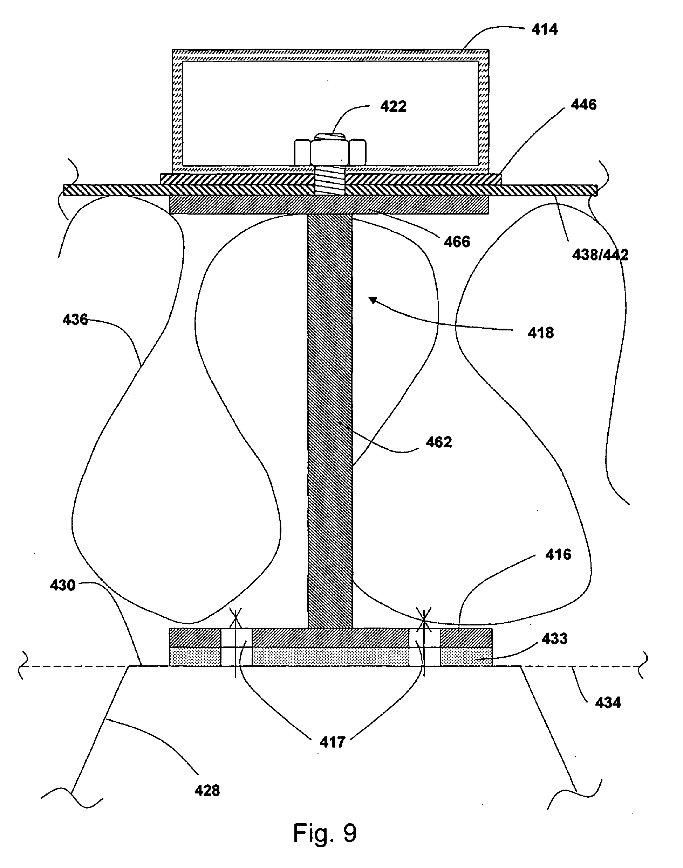

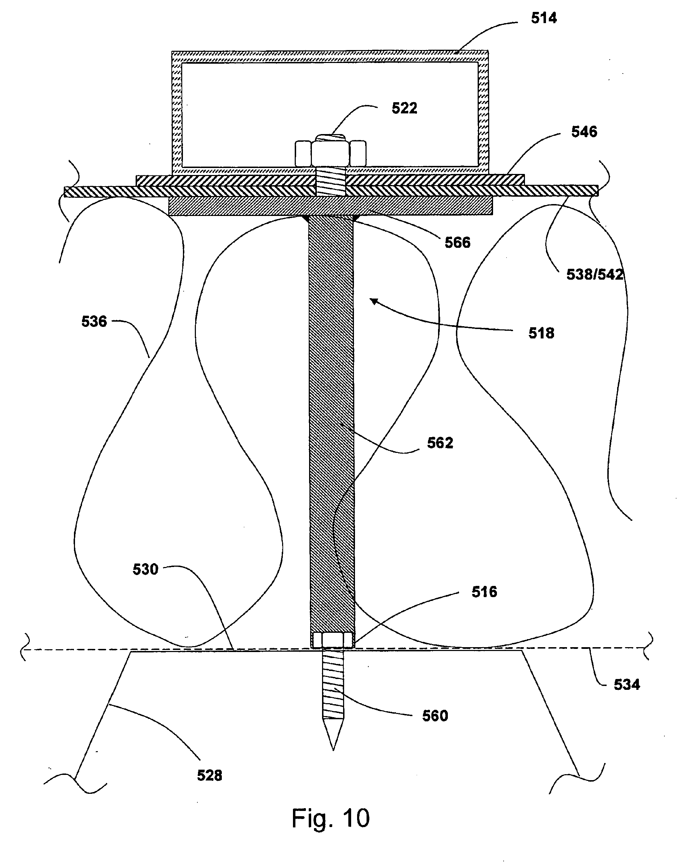

Die Grundfläche des Basisabschnitts 16, 216, 316 wird vorzugsweise so gewählt, dass sie mit dem Lochmuster 17, 117, 317 eine ausreichend große Fläche abdeckt, so dass ausreichend viele Löcher 17, 117, 317 über tragenden Bereichen der Tragkonstruktion der abgedichteten Gebäudeaußenfläche zu liegen kommen. Für manche Anwendungen, d.h. für die Montage an tragfähigeren Konstruktionen, kann die Grundfläche auch verkleinert werden, was anhand der folgenden Ausführungsformen nach den Figuren 9 und 10 erläutert werden soll. Diese Figuren stellen nahezu maßstabsgetreue Schnitte von Befestigungsvorrichtungen dar.

Gemäß Figur 9 ist als Basisabschnitt 416 eine flächenmäßig wesentlich kleinere Platte - beispielsweise mit einem Kantenmaß von etwa 100 x 100 mm - vorgesehen, die mit mehreren Löchern 417 ausgestattet ist und einen Stehbolzen 462 (beispielsweise Stabstahl mit einem Durchmesser von 15 bis 20 mm) trägt bzw. mit diesem verschweißt ist. Oberseitig geht der Stehbolzen 462 über eine Schulter in einen Spann- bzw. Gewindeabschnitt 422 über. Auf der Schulter liegt eine Stützplatte 466 auf, die etwa gleich groß wie die Basisplatte 416 sein kann und gegen die - wie im Zusammenhang mit den Figuren 1 bis 5 beschrieben - über die Platte 446 und die Abdichtung 438, 442 der Montagekörper 414 gespannt wird. Der von dem Stehbolzen 462 überbrückte Raum ist wiederum von einer Wärmedämmung 436 ausgefüllt.

Zur thermischen Entkopplung der Befestigungsvorrichtung 410 und der Tragkonstruktion 428 der Gebäudeaußenfläche kann zusätzlich zwischen dem Basisabschnitt 416 und der Tragkonstruktion 428, vorzugsweise zwischen dem Basisabschnitt 416 und der Dampfsperre 434, ein Isolierabschnitt 433 aus einem Material mit möglichst geringer Wärmeleitfähigkeit z.B. aus Hartkunststoff oder anderen geeigneten Materialien angeordnet werden. Damit stellt die erfindungsgemäße Vorrichtung eine Befestigung von Gegenständen bei gleichzeitiger Wasser- oder Wärmedichtheit der Gebäudeaußenfläche sicher. Der Isolierabschnitt 433 kann vorteilhafterweise aus dem Material der Dachhaut bestehen. In diesem Fall kann bei nachträglich montierten Befestigungsvorrichtungen das zuvor aus der Dachhaut herausgeschnittene Dachhautstück verwendet werden.

Für noch stabilere Bauwerk-Tragkonstruktionen kann die Variante nach Figur 10 zum Einsatz kommen. Die Grundfläche des Basisabschnitts 516 ist hier auf die Querschnittsfläche des Stehbolzens 562 reduziert, der mittels einer eingelassenen Bohrschraube 560 an der Tragkonstruktion 528, und zwar dort, wo eine ausreichend hohe Stabilität vorliegt, verankert wird. Im Übrigen entspricht diese Ausführungsform der Variante nach Figur 9.

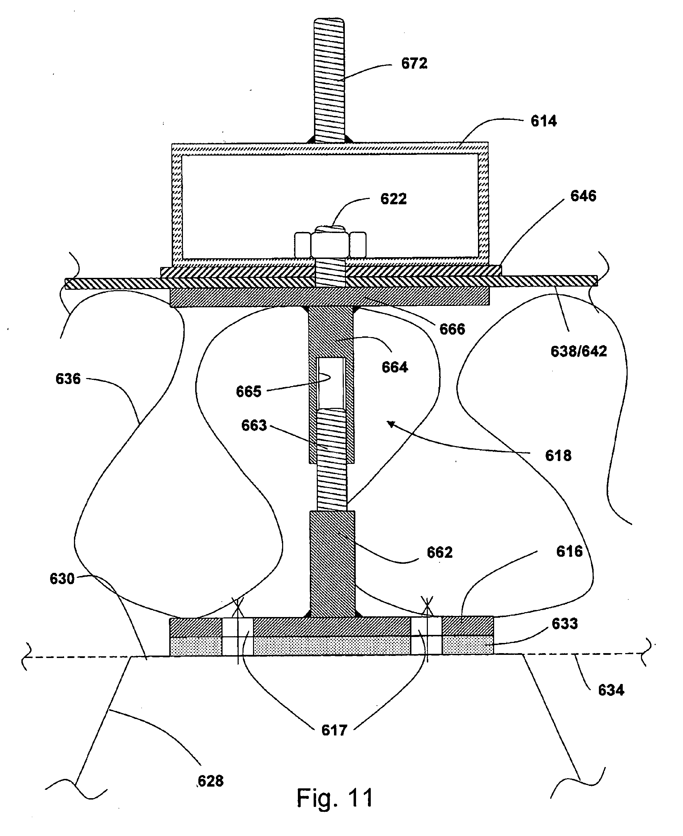

Figur 11 zeigt eine erfindungsgemäße Variante der Ausführungsform aus Figur 9, welche einen längen- bzw. höhenverstellbaren Vorsprungsabschnitt 618 vorsieht. Diese Höhenverstellung des Vorsprungsabschnitts 618 ermöglicht die universelle Verwendung der erfindungsgemäßen Befestigungsvorrichtung 10 für verschieden dicke Schichtenpakete (Wärmedämmung, Abdichtung, Dampfsperre etc.) an Gebäudeaußenflächen. Die Längen- bzw. Höhenverstellung des Vorsprungsabschnitts 618 kann z.B. - wie in Figur 11 gezeigt - durch einen zweiteiligen Stehbolzen 662, 664 erfolgen, dessen unterer Bolzenabschnitt 662 mit dem Basisabschnitt 616 verbunden ist und dessen oberer Bolzenabschnitt 664 eine Stützplatte 666 trägt, welche ihrerseits - wie bei der Ausführungsform nach den Figuren 1 bis 10 - mit dem/n Spann- bzw. Gewindebolzen 622 materialschlüssig verbunden ist. Die relative Lage der beiden Bolzenabschnitte 662 und 664 und somit die relative Lage des Basisabschnitts 612 und der Stützplatte 666 lassen sich über ein Gewinde 663 des einen Bolzenabschnitts 622 und ein Gegengewinde 665 des anderen Bolzenabschnitts 664 einstellen und fixieren.

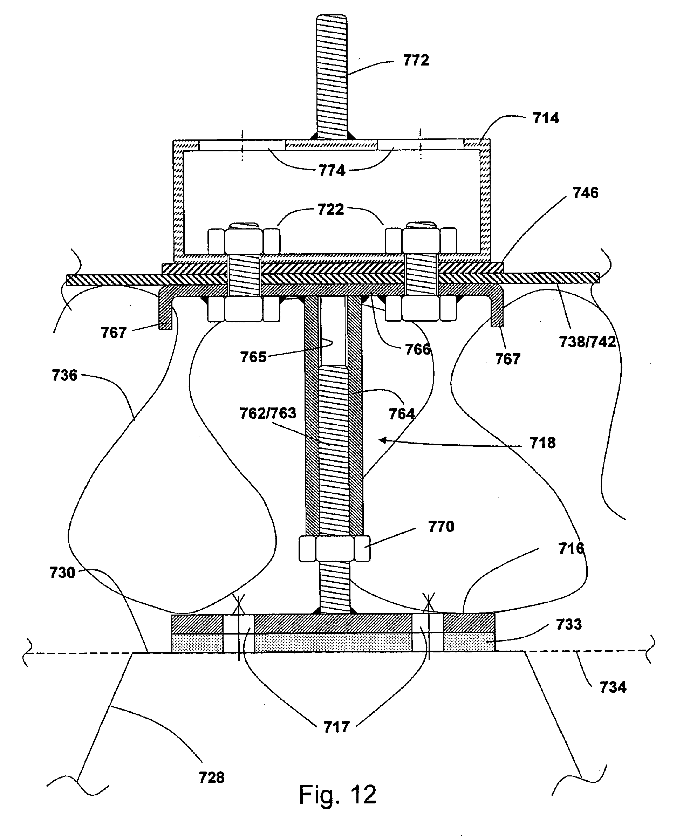

Eine weitere Ausführungsform eines höhenverstellbaren Vorsprungsabschnitts 718 ist in Figur 12 gezeigt. Den unteren Bolzenabschnitt 762 bildet eine Gewindestange 763, die sich in eine Hülse 764 mit einem Gegengewinde 765 schrauben lässt, welche den oberen Bolzenabschnitt bildet und eine Stützplatte 766 trägt. Zur Erhöhung der Festigkeit bei gleichzeitiger Verringerung des Materialsverbrauchs kann die Stützplatte 766 mit Austeifungsrippen 767 versehen werden. Der von dem Bolzenabschnitten 762; 764 überbrückte Raum ist wiederum von einer Wärmedämmung 736 ausgefüllt. Zur Befestigung des Montagekörpers 714 stehen aus der Stützplatte 766 ein oder mehrerer Spann- bzw. Gewindebolzen 722 heraus, welche von innen durch Ausnehmungen in der Stützplatte 766 des Vorsprungsabschnitts 718 durchgeführt und anschließend mit der Stützplatte 766 verschweißt werden. Auf diese Weise wird sichergestellt, dass keine Feuchtigkeit über die Gewindezüge Schraubverbindung ins Innere des Befestigungselements 712 und ins Gebäudeinnere eindringen kann. Zur Erleichterung der Montage können im Montagekörper 714 Aussparungen 774 an geeigneten Stellen vorgesehen sein. Über eine Kontermutter 770 lässt sich der Abstand der beiden Bolzenabschnitte und somit der Abstand zwischen der Stirnfläche 720 des Vorsprungsabschnitts 718 und dem Basisabschnitt 716 einstellen und fixieren.

Dies ermöglicht den Einsatz der erfindungsgemäßen Befestigungsvorrichtung bei Gebäudeaußenflächen mit unterschiedlich dicken Schichten zwischen der Tragkonstruktion 728 und der Abdichtung 746.

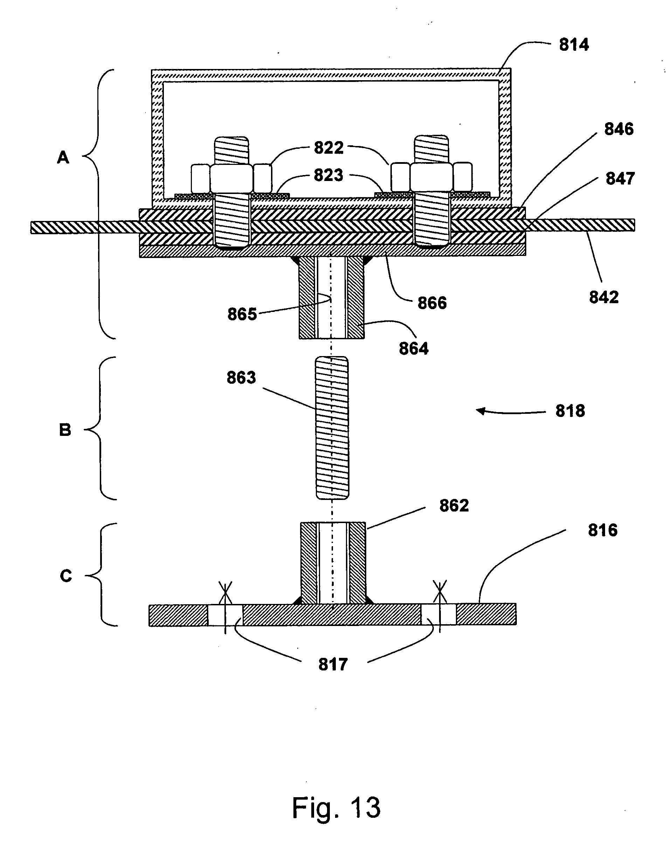

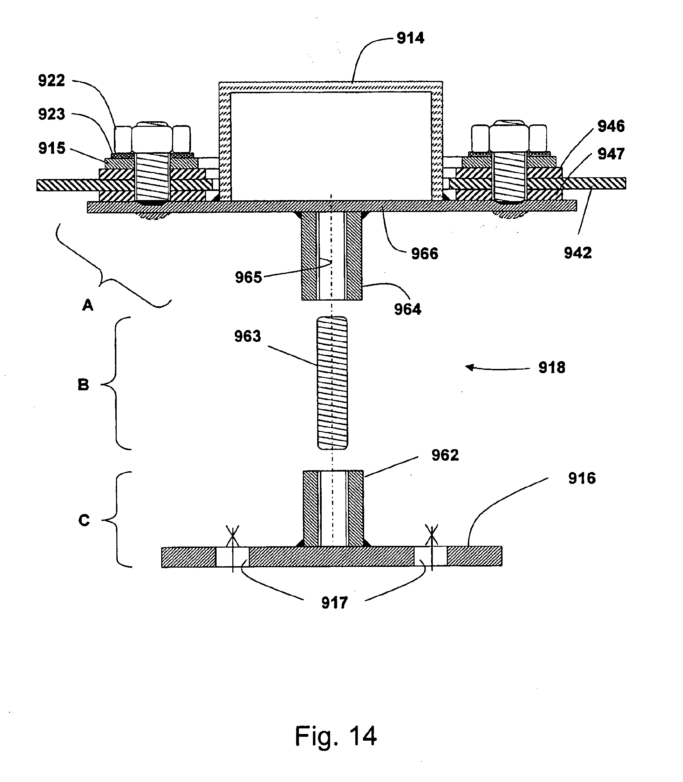

Weiter Ausführungsformen der Erfindung sind in den Figuren 13 und 14 gezeigt. Auch hier sind diejenigen Bauelemente, die den Komponenten der zuvor beschriebenen Ausführungsformen entsprechen, mit ähnlichen Bezugszeichen versehen, denen jedoch eine "8" bzw. "9" vorangestellt sind.

Abweichend von den zuvor beschriebenen Varianten sind die Gewindebolzen 822 an die Oberseite der Stützplatte 866 geschweißt, wobei zusätzlich jeweils eine Schraubensicherung 823 Verwendung findet. Unterseitig trägt die Stützplatte 866 ein Anschlussstück, nämlich eine Schraubenmutter 864, für ein Stegteil in Form einer Gewindestange 863. Der Basisabschnitt 816, d.h. die Montageplatte trägt auf oberseitig ebenfalls eine Schraubmutter 862 für den Eingriff der Gewindestange 863. Schließlich ist zusätzlich zu der Dichtungsbeilage 846 auf der Oberseite auch auf der Unterseite eine weitere Dichtungsbeilage 847 vorgesehen.

Als Material für die Dichtungs- oder Druckbeilage kann wieder Neopren dienen, aber es kann auch das Material der Abdichtungsmanschette herangezogen werden. Grundsätzlich wird das Material und/oder die Geometrie der Dichtungs- oder Druckbeilage an die vorliegenden Randbedingungen angepasst, wie z.B. an die Dicke und/oder die Kompressibilität der einzuklemmenden Schicht, so dass ein Höchstmaß and Dichtwirkung sichergestellt ist.

Für den Anwendungsfall einer nachträglich auf einem Flachdach zu montierenden Befestigungsvorrichtung ist mit dem Bezugszeichen A eine Montageeinheit bezeichnet, die für unterschiedlichste Anwendungen in vormontiertem Zustand auf Lager gehalten werden kann. Dabei trägt also die Stützplatte 866 unterseitig einen Anschluss zum Stegteil 863. Der Spannbolzen 822 ist mit der Stützplatte entweder materialschlüssig oder derart verbunden, dass eine Fügefläche zwischen dem Spannbolzen und der Spannplatte keinen Durchtritt durch die Stützplatte hat. Der mit 814 bezeichnete Montagekörper 814 für die Aufbauten wird unter Zwischenschaltung der die Stützplatte allseitig überragenden Abdichtungsmanschette 842 mittels des zumindest einen Spannbolzens 822 gegen die Stützplatte 866 gespannt. Die für die Abdichtung entscheidenden Bauteile sind demnach bereits vormontiert, so dass auf der Baustelle lediglich noch die Dachhaut aufgeschnitten werden muss, die Einheiten A, B und C eingesetzt und die Abdichtungsmanschette 842 mit der Dachhaut umlaufend dicht verbunden, vorzugsweise verschweißt oder verklebt werden muss, wodurch sich nach dem Verschweißen der Abdichtungsmanschette 842 mit der restlichen Dachhaut eine vollkommene Abdichtung des Dachs sicherstellen lässt, wie dies unter Bezug auf die Ausführungsformen der Figuren 1 bis 12 beschrieben ist. Montagefehler können somit weitgehend vermieden werden.

Auch die Montageplatte 816 kann zusammen mit einer Gewindemutter 862 zu einer universell verwendbaren Montageeinheit C zusammengefasst sein. Einziges variables Teil B der Montagegruppe ist dann das Stegteil 863, das in verschiedenen Längen auf Lager gehalten werden muss.

Es können auch die Einheiten A und B oder die Einheiten B und C zu einheitlich handhabbaren Einheiten zusammengefasst werden.

Eine alternative Ausgestaltung der Montageeinheit ist in Figur 14 gezeigt.

Auch diese Montageeinheit hat eine Stützplatte 966, welche unterseitig einen Anschluss zu einem Stegteil in Form einer Gewindestange 963 hat und von der sich oberseitig mehrere Spannbolzen 922 in Form von Gewindebolzen weg erstrecken, die mit der Stützplatte entweder materialschlüssig oder derart verbunden sind, dass eine Fügefläche zwischen dem Spannbolzen und der Spannplatte keinen Durchtritt durch die Stützplatte 966 hat. Anstelle einer Schweißverbindung zwischen Spannbolzen und Stützplatte kann auch eine Schraubverbindung Anwendung finden, wobei in diesem Fall in der Stützplatte ein Sackloch ausgebildet wird, das mit einem Innengewinde versehen wird.

Im Unterschied zur Ausgestaltung nach Figur 13 ist ein auf der Stützplatte sitzender Montagekörper 914 für die Aufbauten von einem Spannring 915 umgeben. Der Spannring 915 wird unter Zwischenschaltung der die Stützplatte 966 allseitig überragenden Abdichtungsmanschette 842 mittels der Spannbolzen 922 gegen die Stützplatte gespannt, wodurch sich nach dem Verschweißen der Abdichtungsmanschette 842 mit der restlichen Dachhaut eine vollkommene Abdichtung des Dachs sicherstellen lässt, wie dies unter Bezug auf die Ausführungsformen der Figuren 1 bis 12 beschrieben ist.

Auch bei dieser Variante kann die Klemm- bzw. Spannkraft der Spannbolzen 922 auf die Abdichtungsmanschette 942 zumindest auf einer Seite über eine Abdichtungsbeilage in Form von Ringscheiben 946 und 947 eingeleitet werden.

Das Stegteil kann wieder von einem Gewindestab 963 oder -rohr gebildet sein, wobei die Stützplatte 966 unterseitig eine Schraubmutter 964 tragen kann.

Auch hier kann das Stegteil 963 mit der Stützplatte zu einer handhabbaren Einheit verbunden sein, die dann in eine Aufnahme 962 des Basisteils 916 eingesetzt, beispielsweise eingeschraubt wird.

Schließlich können auch alle Einheiten A, B und C zu einer vormontierten Montageeinheit zusammengefasst werden.

Freilich sind auch andere aus dem Stand der Technik bekannte Maßnahmen zur Höhen- und Längenverstellung, z.B. eine Hülsen-Stift-Anordnung mit einer Klemmschraube etc., auf den Anmeldungsgegenstand anwendbar.

Anstelle von Bohrungen 26 (siehe Figur 1) kann der Montagekörper 614 - wie in den Figuren 11 und 12 gezeigt - mit einer Gewindestange 672, 772 versehen sein, an welcher ein Gegenstand, z.B. die Untertragkonstruktion einer Photovoltaik-Anlage 48, befestigt werden kann. Die Länge der Gewindestange 672, 772 kann so gewählt werden, dass sie neben der Befestigung auch noch einen Spielraum für eine Höhenverstellung des zu befestigenden Gegenstandes erlaubt.

Freilich kann anstelle der mit einem Außengewinde versehenen Gewindestange 672, 772 auch ein Rohr mit einem Innengewinde vorgesehen werden, welches mit einem entsprechenden Gewindebolzen am Befestigungsgegenstand verschraubbar und höhenjustierbar ist.

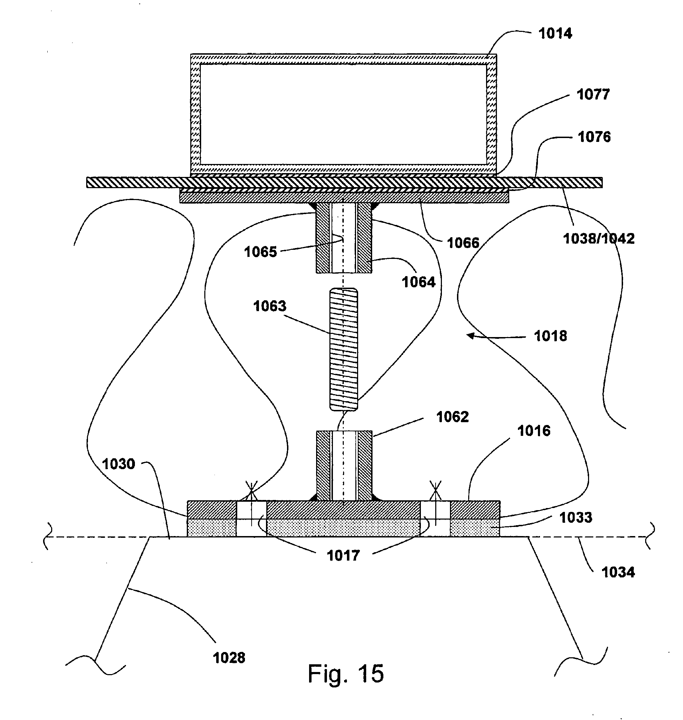

Fig. 15 zeigt eine weitere Ausführungsform einer nicht von der Erfindung umfassten Befestigungsvorrichtung, bei welcher die Verbindung zwischen Vorsprungsabschnitt 1018 und Montagekörper 1014 nicht kraftschlüssig, z.B. durch eine die Dachabdichtung 1038 bzw. Abdichtungsmanschette 1042 durchdringende Schraubverbindung erfolgt, sondern über eine Schweißverbindung. Dabei weisen der Vorsprungsabschnitt 1018 und der Montagekörper 1014 jeweils Beschichtungen 1076 bzw. 1077 auf, welche sich mit der Abdichtung 1038 bzw. der Abdichtungsmanschette 1042 z.B. im Induktionsschweißverfahren oder in anderen geeigneten Schweißverfahren miteinander verbinden lassen. Für die Beschichtung sind entsprechende Materialien zu wählen, die mit dem Material der Abdichtung 1038 bzw. Abdichtungsmanschette 1042 kompatibel sind. Dazu eignen sich unter anderem hochpolymere Kunststoffe, insbesondere Thermoplaste.

Durch Aufschmelzen der Beschichtungen 1076, 1077 können der Vorsprungsabschnitt 1018 bzw. der Montagekörper stoffschlüssig mit der Abdichtung 1038, 1042 verbunden werden. Dabei ist zu beachten, dass der Montagekörper 1014 und der Vorsprungsabschnitt 1018 jeweils so positioniert werden, dass sie miteinander fluchten, so dass Zug- und Druckkräfte vom Montagekörper 1014 über die Abdichtung 1038 zum Vorsprungsabschnitt übertragen werden können.

Je nach Anwendungsfall und zu erwartende Kräfte, die auf die Befestigungsvorrichtung wirken, ist es auch denkbar, den Montagekörper 1014 und den Vorsprungsabschnitt 1018 jeweils mit der Abdichtung 1038 bzw. mit der Abdichtungsmanschette 1042 zu verkleben.

Der Vorteil einer stoffschlüssigen Verbindung liegt insbesondere darin, dass eine Krafteinleitung in die Tragkonstruktion der Gebäudeaußenfläche gewährleistet wird, ohne dabei zur Befestigung des Montagekörpers die Abdichtung durchdringen zu müssen. Dadurch wird verhindert, dass Feuchtigkeit in das Gebäudeinnere gelangt.

Das Stegteil kann wieder von einem Gewindestab 1063 oder -rohr gebildet sein, wobei die Stützplatte 1066 unterseitig eine Schraubmutter 1064 tragen kann.

Auch hier kann das Stegteil 1063 mit der Stützplatte zu einer handhabbaren Einheit verbunden sein, die dann in eine Aufnahme 1062 des Basisteils 1016 eingesetzt, beispielsweise eingeschraubt wird.

Es ist auch möglich bei einem Bauwerk die vorstehenden Varianten der Befestigungsvorrichtungen bzw. Befestigungselemente miteinander zu kombinieren.

Selbstverständlich sind Abwandlungen von der beschriebenen Ausführungsform möglich, ohne den Grundgedanken der Erfindung zu verlassen.

Beispielweise kann die erfindungsgemäße Befestigungsvorrichtung auch in Verbindung mit einem Umkehrdach eingesetzt werden. Umkehrdächer finden in der Regel Anwendung bei Massivbaudachkonstruktionen. In diesem Fall kann Höhe des Vorsprungsabschnitts wesentlich kleiner bleiben, da sich die Abdichtung unmittelbar auf der Dachtragkonstruktion befindet. Dabei wird die Abdichtungsmanschette direkt mit der auf der Dachtragkonstruktion befindlichen Abdichtung dichtend verbunden. Entsprechend ist die Höhe des Montagekörpers so zu vergrößern, dass diese die über der Abdichtung befindliche Wärmedämmung und ggf. andere Schichten durchdringt.

Ferner kann die Geometrie der Befestigungsvorrichtung unter anderem auch dergestalt sein, dass der Basisabschnitt rund ist und der Vorsprungsabschnitt die Form eines Zylinders hat.

Der Montagekörper kann statt einem geschlossenen Profil, wie es in Fig. 1 und Fig. 2 gezeigt ist, aus zwei jeweils miteinander befestigten U-Profilen bestehen.

Die erfindungsgemäße Befestigungsvorrichtung ist zwar insbesondere für Leichtdachkonstruktionen mit Trapezblechprofilen konzipiert, jedoch lässt sich diese ohne weiteres zur Gewichtsersparnis bei Massivdachkonstruktionen oder anderen Warmdachkonstruktionen verwenden.

Anstelle eines ebenen Basisabschnitts bzw. einer ebenen Montageplatte kann auch eine Profilplatte verwendet werden, die sich an die Oberfläche des Trapezprofils der Flachdachkonstruktion vorzugsweise mehrflächig anschmiegt.

### Bezugszeichenliste

- 10; 110;...; 1010: Befestigungsvorrichtung
- 12; 112;...; 1012: Befestigungselement
- 14; 114;...; 1014: Montagekörper
- 16; 116;...; 1016: Basisabschnitt
- 17; 117;...; 1017: Bohrungen
- 18; 118;...; 1018: Vorsprungsabschnitt
- 20: Stirnfläche
- 22; 122;...; 922: Spann- bzw. Gewindebolzen
- 823; 923: Schraubsicherung
- 24: Bohrungen
- 26: Bohrungen
- 28; 428;...; 728; 1028: Trapezblech
- 30; 130;...; 730; 1030: Obergurte
- 32: Untergurte
- 433; 633; 733; 1033: Isolierabschnitt
- 34; 134;...; 734; 1034: Dampfsperre
- 36; 436;...; 736: Wärmedämmung
- 38; 138;...; 738: Abdichtung
- 40: Kippdübel
- 42; 142;...; 742: Abdichtungsmanschette
- 44: Überlappungsabschnitte
- 46; 146;...; 746: Neoprenplatte
- 746; 846: Dichtungsbeilage
- 847; 947: Dichtungsbeilage
- 48: Träger einer Photovoltaik-Anlage
- 50: Befestigungselement
- 52: Schlitze
- 54: Abschnitte
- 56: Abdichtbahnen
- 560: Bohrschraube
- 362; 462; 562; 662: Stehbolzen / unterer Bolzenabschnitt
- 862, 962: Schraubmutter
- 663; 763: Gewindeabschnitt
- 664; 764: oberer Bolzenabschnitt
- 864, 964: Schraubmutter
- 665; 765: Gegengewinde
- 366; 466;...; 1066: Stützplatte
- 767: Aussteifungsrippen
- 770: Kontermutter
- 672; 772: Gewindestange
- 774: Montageaussparung
- 1076: Beschichtung
- 1077: Beschichtung

- A, B, C: Montageeinheiten
- H: Höhe des Befestigungselements
- WD: Höhe der Wärmedämmung

## Patentansprüche

1. Befestigungsvorrichtung (10) für Gegenstände (48), insbesondere für Aufbauten wie Photovoltaikanlagen, an abgedichteten Gebäudeaußenflächen wie z.B. Flachdachkonstruktionen, mit:
einem Montagekörper (14), an welchem der zu befestigende Gegenstand (48) befestigbar ist; und
einem Befestigungselement (12) mit wenigstens einem Vorsprungsabschnitt (18) und einem Basisabschnitt (16); wobei
der Basisabschnitt (16) an einer Tragkonstruktion (28) der Gebäudeaußenfläche befestigbar ist und der Vorsprungsabschnitt (18) mit dem Montagekörper (14) verbindbar ist,
der Vorsprungsabschnitt (18) derart konfiguriert ist, dass er auf der der Tragkonstruktion (28) abgewandten Seite bis zu einer Ebene einer auf der Tragkonstruktion (28) befindlichen Abdichtung (38) vorspringt und dabei die Abdichtung (38) und ggf. andere zwischen Tragkonstruktion (28) und Abdichtung (38, 42) befindliche Schichten, insbesondere eine Wärmedämmschicht (36), durchdringt,
die Befestigungsvorrichtung
eine zwischen dem Montagekörper (14) und dem Vorsprungsabschnitt (18) angeordnete und den Vorsprungsabschnitt (18) allseitig überragende Abdichtungsmanschette (42) aufweist, die geeignet ist, mit der umgebenden Abdichtung (38) Überlappungsabschnitte (44) zu bilden und mit dieser dichtend verbunden zu werden, wobei
der Vorsprungsabschnitt (18) wenigstens einen Spann- bzw. Gewindebolzen (22) zur Befestigung des Montagekörpers (14) aufweist, der mit dem Vorsprungsabschnitt (18) materialschlüssig oder derart verbunden ist, dass eine Fügefläche zwischen dem Spannbolzen (22) und dem Vorsprungsabschnitt (18) keinen Durchtritt durch den Vorsprungsabschnitt (18) hat;
die Abdichtungsmanschette (42) mittels des wenigstens einen Spann- bzw. Gewindebolzens (22) zwischen dem Montagekörper (14) und dem Vorsprungsabschnitt (18) dichtend eingespannt ist; und
die Befestigungsvorrichtung (10) im vormontierten Zustand mit der zwischen dem Montagekörper (14) und dem Vorsprungsabschnitt (18) eingespannten Abdichtungsmanschette (42) an der Tragkonstruktion (28) befestigbar ist; **dadurch gekennzeichnet, dass** der Vorsprungsabschnitt (618; 718; 818) höheneinstellbar ist.

2. Befestigungsvorrichtung (10) nach Anspruch 1, **dadurch gekennzeichnet, dass** zwischen Montagekörper (14) und Abdichtungsmanschette (42) und/oder zwischen Vorsprungsabschnitt (866) und Abdichtungsmanschette (842) eine Dichtungs- oder Druckbeilage, wie z.B. eine Neoprenschicht oder -platte (46), angeordnet ist.

3. Befestigungsvorrichtung (10) nach einem der vorhergehenden Ansprüche,
**dadurch gekennzeichnet, dass** der wenigstens eine Vorsprungsabschnitt (18) geeignet ist, über die Abdichtung (38) hervorzustehen.

4. Befestigungsvorrichtung (10) nach einem der vorhergehenden Ansprüche,
**dadurch gekennzeichnet, dass** die Abdichtungsmanschette (42) mit der Abdichtung (38) verkleb- oder verschweißbar ist.

5. Befestigungsvorrichtung (10) nach einem der vorhergehenden Ansprüche,
**dadurch gekennzeichnet, dass** die Abdichtungsmanschette (42) aus dem gleichen Material wie die Abdichtung (38) oder aus einem damit zur Herstellung einer dichtenden Verbindung verträglichen Material, insbesondere aus einem zweilagigen Bitumen oder einem einlagigen Kunststoff, hergestellt ist.

6. Befestigungsvorrichtung (10) nach einem der vorhergehenden Ansprüche,
**dadurch gekennzeichnet, dass** im Basisabschnitt (16) in vorbestimmten Abständen Bohrungen (17) vorgesehen sind.

7. Befestigungsvorrichtung (10) nach einem der vorhergehenden Ansprüche,
**dadurch gekennzeichnet, dass** der Basisabschnitt (16) und die Tragkonstruktion (28) eine Dampfsperrschicht (34) einschließen können.

8. Befestigungsvorrichtung nach einem der vorhergehenden Ansprüche, ferner **gekennzeichnet durch** einen Isolierabschnitt (433) aus einem Material mit geringer Wärmeleitfähigkeit, vorzugsweise eine Hartkunststoffscheibe, der zur thermischen Entkopplung der Befestigungsvorrichtung (410) und der Tragkonstruktion (428) zwischen der Tragkonstruktion (428) und dem Basisabschnitt (416) angeordnet werden kann.

9. Befestigungsvorrichtung nach einem der vorhergehenden Ansprüche, **dadurch gekennzeichnet, dass** der Vorsprungsabschnitt (818) aufweist:
eine Stützplatte (866), die mit dem Montagekörper (814) verbindbar ist;
einen oberen Anschlussabschnitt (864), vorzugsweise in Form einer Schraubmutter, mit der die Platte (866) an ein Stegteil (863), vorzugsweise in Form einer Gewindestange anschließbar ist; und
einen unteren Anschlussabschnitt (862), vorzugsweise in Form einer weiteren Schraubmutter, über den das Stegteil (863) an den Basisabschnitt (816) anschließbar ist und der mit dem Basisabschnitt (816) verbunden ist, wobei
die Stützplatte (866) und der Montagekörper (814) unter Zwischenschaltung der Abdichtungsmanschette (846) eine Montageeinheit (A) bilden, die im vormontierten Zustand über das Stegteil (863) mit dem an der Tragkonstruktion (28) der Gebäudeaußenfläche befestigten Basisabschnitt (816) verbindbar ist.

## Claims

1. Fastening device (10) for fastening objects (48), in particular for fastening structures such as photovoltaic systems, to sealed outer building surfaces such as, for example, flat roof constructions, having:
a mounting body (14) to which the object (48) to be fastened can be fastened; and
a fastening element (12) having at least one projecting section (18) and a base section (16); wherein
the base section (16) can be fastened to a supporting structure (28) of the outer building surface and the projecting section (18) can be connected to the mounting body (14),
the projecting section (18) is so configured that, on the side remote from the supporting structure (28), it projects to a plane of a seal (38) located on the supporting structure (28) and thereby penetrates the seal (38) and any other layers located between the supporting structure (28) and the seal (38, 42), in particular a heat-insulating layer (36),
the fastening device comprises a sealing collar (42) which is arranged between the mounting body (14) and the projecting section (18) and extends beyond the projecting section (18) on all sides, which sealing collar (42) is suitable for forming overlapping sections (44) with the surrounding seal (38) and for being sealingly connected thereto, wherein
the projecting section (18) has at least one clamping or threaded bolt (22) for the fastening of the mounting body (14), which clamping or threaded bolt (22) is connected to the projecting section (18) by material bonding or in such a manner that a joint surface between the clamping bolt (22) and the projecting section (18) has no passage through the projecting section (18);
the sealing collar (42) is sealingly clamped between the mounting body (14) and the projecting section (18) by means of the at least one clamping or threaded bolt (22); and
the fastening device (10) can be fastened to the supporting structure (28) in the pre-mounted state with the sealing collar (42) clamped between the mounting body (14) and the projecting section (18);
**characterised in that** the projecting section (618; 718; 818) is adjustable in terms of its height.

2. Fastening device (10) according to claim 1, **characterised in that** a sealing or pressure insert, such as, for example, a neoprene layer or sheet (46), is arranged between the mounting body (14) and the sealing collar (42) and/or between the projecting section (866) and the sealing collar (842).

3. Fastening device (10) according to any one of the preceding claims, **characterised in that** the at least one projecting section (18) is suitable for protruding beyond the seal (38).

4. Fastening device (10) according to any one of the preceding claims, **characterised in that** the sealing collar (42) can be adhesively bonded or welded to the seal (38).

5. Fastening device (10) according to any one of the preceding claims, **characterised in that** the sealing collar (42) is made from the same material as the seal (38) or from a material that is compatible therewith to produce a sealing connection, in particular from a two-layer bitumen or a single-layer plastics material.

6. Fastening device (10) according to any one of the preceding claims, **characterised in that** bores (17) are provided in the base section (16) at predetermined intervals.

7. Fastening device (10) according to any one of the preceding claims, **characterised in that** the base section (16) and the supporting structure (28) can enclose a vapour barrier layer (34).

8. Fastening device according to any one of the preceding claims, further **characterised by** an insulating section (433) of a material having low thermal conductivity, preferably a rigid plastics disc, which can be arranged between the supporting structure (428) and the base section (416) for the purpose of thermal decoupling of the fastening device (410) and the supporting structure (428).

9. Fastening device according to any one of the preceding claims, **characterised in that** the projecting section (818) comprises:
a support plate (866) which can be connected to the mounting body (814);
an upper connecting section (864), preferably in the form of a screw nut, with which the plate (866) can be connected to a bar member (863), preferably in the form of a threaded rod; and
a lower connecting section (862), preferably in the form of a further screw nut, *via* which the bar member (863) can be connected to the base section (816) and which is connected to the base section (816), wherein
the support plate (866) and the mounting body (814), with the interposition of the sealing collar (846), form a mounting unit (A) which in the pre-mounted state can be connected via the bar member (863) to the base section (816) fastened to the supporting structure (28) of the outer building surface.

## Revendications

1. Dispositif de fixation (10) pour des objets (48), en particulier pour des structures tels que des installations photovoltaïques, servant à la fixation au niveau de surfaces extérieures d'immeuble étanchéifiées telles que des structures de toit plat, comprenant :
un corps de montage (14), au niveau duquel l'objet (48) à fixer peut être fixé ; et
un élément de fixation (12) doté d'au moins une section faisant saillie (18) et d'une section de base (16), sachant
que la section de base (16) peut être fixée au niveau de la structure porteuse (28) de la surface extérieure d'immeuble et que la section faisant saillie (18) peut être reliée au corps de montage (14),
la section faisant saillie (18) est configurée de telle manière qu'elle fait saillie, sur le côté opposé à la structure porteuse (28), jusqu'à un plan d'un système d'étanchéification (38) se trouvant sur la structure porteuse (28) et traverse ce faisant le système d'étanchéification (38) et éventuellement d'autres couches se trouvant entre la structure porteuse (28) et le système d'étanchéification (38, 42), en particulier une couche d'isolation thermique (36),
le dispositif de fixation présente une coupelle d'étanchéification (42) dépassant de tous les côtés de la section faisant saillie (18) et disposée entre le corps de montage (14) et la section faisant saillie (18), laquelle coupelle d'étanchéification est adaptée pour former des sections de chevauchement (44) avec le système d'étanchéification (38) enveloppant et être reliées à ce dernier de manière à assurer l'étanchéité, sachant que
la section faisant saillie (18) présente au moins un boulon de serrage ou fileté (22) servant à la fixation du corps de montage (14), lequel est relié à la section faisant saillie (18) par liaison de matière ou de telle manière qu'une surface d'assemblage entre le boulon de serrage (22) et la section faisant saillie (18) ne comporte aucun passage à travers la section faisant saillie (18), et
que la coupelle d'étanchéification (42) est enserrée de manière à assurer l'étanchéité entre le corps de montage (14) et la section faisant saillie (18) au moyen du boulon de serrage ou du boulon fileté (22) au moins au nombre de un ; et
que le dispositif de fixation (10) peut être fixé, à l'état prémonté, à la coupelle d'étanchéification (42) de la structure porteuse (28) enserrée entre le corps de montage (14) et la section faisant saillie (18),
**caractérisé en ce que** la section faisant saillie (618 ; 718 ; 818) est réglable en hauteur.

2. Dispositif de fixation (10) selon la revendication 1, **caractérisé en ce qu'**une garniture d'étanchéité ou une garniture de pression, telle que par exemple une couche ou une plaque de néoprène (46), est disposée entre le corps de montage (14) et la coupelle d'étanchéification (42) et/ou entre la section faisant saillie (866) et la coupelle d'étanchéification (842).

3. Dispositif de fixation (10) selon l'une quelconque des revendications précédentes, **caractérisé en ce que** la section faisant saillie (18) au moins au nombre de une est appropriée pour faire saillie du système d'étanchéification (38).

4. Dispositif de fixation (10) selon l'une quelconque des revendications précédentes, **caractérisé en ce que** la coupelle d'étanchéification (42) peut être collée ou soudée au système d'étanchéification (38).

5. Dispositif de fixation (10) selon l'une quelconque des revendications précédentes, **caractérisé en ce que** la coupelle d'étanchéification (42) est fabriquée à partir du même matériau que le système d'étanchéification (38) ou à partir d'un matériau compatible afin d'établir une liaison assurant l'étanchéité, en particulier à partir d'un bitume à deux couches ou d'une matière plastique à une couche.

6. Dispositif de fixation (10) selon l'une quelconque des revendications précédentes, **caractérisé en ce que** des alésages (17) sont prévus dans la section de base (16) à des espacements prédéfinis.

7. Dispositif de fixation (10) selon l'une quelconque des revendications précédentes, **caractérisé en ce que** la section de base (16) et la structure porteuse (28) peuvent former une couche formant barrière contre la vapeur (34).

8. Dispositif de fixation selon l'une quelconque des revendications précédentes, **caractérisé en outre par** une section d'isolation (433) constituée d'un matériau présentant une faible conductivité thermique, de préférence une rondelle en plastique dur, qui peut être disposée entre la structure porteuse (428) et la section de base (416) aux fins du découplage thermique du dispositif de fixation (410) et de la structure porteuse (428).

9. Dispositif de fixation selon l'une quelconque des revendications précédentes, **caractérisé en ce que** la section faisant saillie (818) présente :
une plaque de support (866), qui peut être reliée au corps de montage (814) ;
une section de raccordement supérieure (864), se présentant de préférence sous la forme d'un écrou, à l'aide de laquelle la plaque (866) peut être raccordée à un élément de liaison (863), se présentant de préférence sous la forme d'une tige filetée ;
et
une section de raccordement inférieure (862), se présentant de préférence sous la forme d'un autre écrou, par l'intermédiaire de laquelle l'élément de liaison (863) peut être raccordé à la section de base (816) et qui est reliée à la section de base (816), sachant que
la plaque de support (866) et le corps de montage (814) forment une unité de montage (A) en intercalant la coupelle d'étanchéification (846), ladite unité de montage pouvant être reliée, dans l'état prémonté, par l'intermédiaire de l'élément de liaison (863), à la section de base (816) fixée à la structure porteuse (28) de la surface extérieure d'immeuble.
